# EUROPÄISCHE PATENTANMELDUNG

(11) **EP 1 530 001 A1**
(43) Veröffentlichungstag der Anmeldung: **11.05.2005**
(21) Anmeldenummer: 03405797.6
(22) Anmeldetag: 06.11.2003
(51) Int. Cl.: F16M 13/02, G06F 1/16

(54) **Befestigungsvorrichtung für einen Flachbildschirm und Flachbildschirm**

(71) Anmelder: Dicom AG, 6343 Rotkreuz (CH)
(72) Erfinder: Ronchetti, Andreas, 6319 Allenwinden (CH)
(74) Vertreter: Rutz, Peter

(57) **Zusammenfassung**

Die Befestigungsvorrichtung (3) dient der Installation eines Flachbildschirms (1), der eine grossflächige, in einem Gehäuse (11) angeordnete und von einer tragenden Struktur (10) gehaltene Anzeigeeinheit (12) aufweist. Der installierte Flachbildschirm (1) ist an dessen Unterseite (111) von der Befestigungsvorrichtung (3) mittels eines Tragprofils (34) gestützt und getragen, das wenigstens ein stabil befestigtes Halteelement (343) aufweist, welches in ein entsprechend ausgestaltetes Aufnahmeteil (101) der tragenden Struktur (10) eingreift und diese in Bezug auf das Tragprofil (34) in konstanter Lage hält. Der Flachbildschirm (1) weist somit eine tragende Struktur (10) auf, an deren Unterseite wenigstens ein Aufnahmeteil (101) vorgesehen ist, in welches das wenigstens eine Halteelement (343) eingreifen kann.

## Beschreibung

Die vorliegende Erfindung betrifft eine Befestigungsvorrichtung für einen Flachbildschirm und einen Flachbildschirm nach dem Oberbegriff des Patentanspruchs 1 bzw. 9.

Auf dem Markt erhältliche Flachbildschirme, die auf der Flüssigkristall-, Plasma-, oder Elekrolumineszenz-Technologie basieren, weisen im wesentlichen eine mit Glassubstraten und einer Pixelmatrix versehene Anzeigeeinheit mit einer Bildschirmdiagonale von bis zu 100 cm, eine mit einer Leiterplatte versehene Treibereinheit und ein Gehäuse auf. Der Aufbau eines solchen Flachbildschirms ist in [1], EP 1 265 210 A1 beschrieben.

Grössere Flachbildschirme dieser Art werden oft für Unterhaltungs-, Werbe- oder Informationszwecke in Ausstellungshallen, Hotels, in Bahnstationen oder auf Flughäfen eingesetzt. Um den Zusehern oder Passanten einen optimalen Blick auf die Anzeigeeinheit zu gewähren, wird der Flachbildschirm normalerweise mittels einer Befestigungsvorrichtung montiert, welche erlaubt, die Höhe, die seitliche Ausrichtung und die Neigung des Flachbildschirms bedarfsweise zu justieren. Zur Installation grösserer und schwerer Flachbildschirme sind dabei stabile Befestigungsvorrichtungen erforderlich, mittels derer die Flachbildschirme sicher gehalten werden. Befestigungsvorrichtungen, wie sie in [2], U.S. Patentschrift 6,061,104 beschrieben sind, sind dabei nur für die Montage leichterer Flachbildschirme geeignet.

Nebst den funktionellen Merkmalen der Befestigungsvorrichtung sind auch optische und ästhetische Merkmale von Bedeutung. Die installierte Befestigungsvorrichtung soll daher nicht störend in Erscheinung treten.

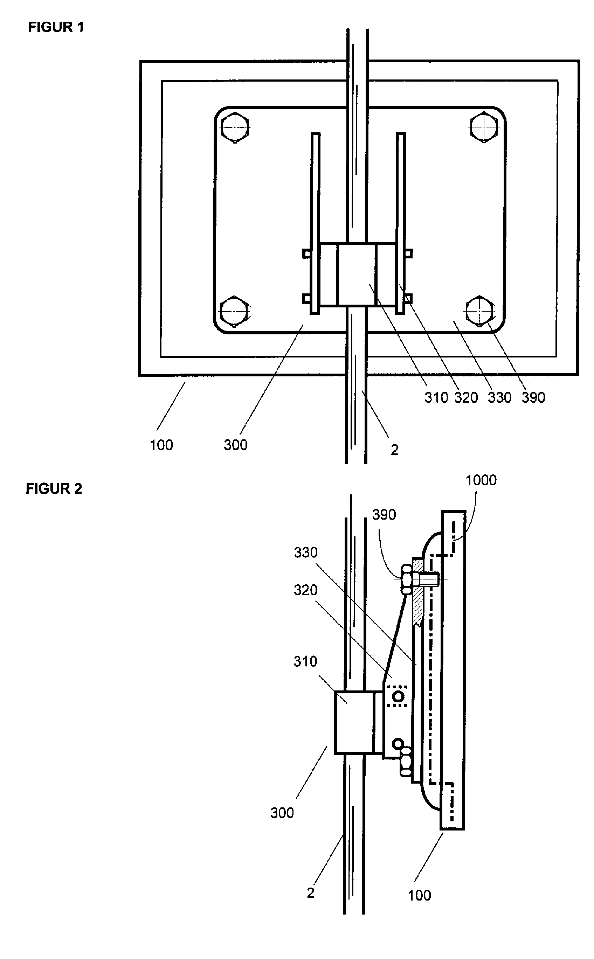

Eine zur stabilen Befestigung von grossen Flachbildschirmen geeignete Befestigungsvorrichtung, die bei der frontseitigen Betrachtung des Flachbildschirms nicht störend in Erscheinung tritt, ist nachstehend in den Figuren 1 und 2 gezeigt. Diese Befestigungsvorrichtung 300 weist einen Montageblock 310 auf, der entlang einer Stange 2 verschiebbar, drehbar und arretierbar gelagert und der mittels einer Kippvorrichtung 320 mit einer Montageplatte 330 verbunden ist. Die an der Rückwand des Flachbildschirms 100 anliegende Montageplatte 330 ist mittels Schrauben 390 mit der tragenden Struktur 1000 des Flachbildschirms 100 verbunden.

Bei dieser Befestigungsvorrichtung 300 ist die tragende Struktur 1000 des Flachbildschirms 100 daher derart gegen dessen Rückwand geführt, dass die Schrauben 390 montierbar sind. Die Befestigungsvorrichtung 300 wird vorzugsweise vor der Installation des Flachbildschirms 100 vormontiert. Dazu wird der Montageblock 310 an der Stange 2 befestigt und auf einer gewünschten Höhe fixiert. Anschliessend wird der Flachbildschirm 100 vorzugsweise von zwei Hilfspersonen soweit angehoben, dass die Montageschrauben 390 von einer dritten Person durch die Montageplatte 330 hindurch in Gewindebohrungen einführbar sind, die in der tragenden Struktur 1000 vorgesehen sind. Anschliessend werden die Montageschrauben 390 festgezogen und der Flachbildschirm 100 auf die vorgesehene Höhe angehoben. Der zeitliche und personelle Aufwand zur Montage des Flachbildschirms 100 ist daher erheblich.

Der vorliegenden Erfindung liegt daher die Aufgabe zugrunde, eine verbesserte Befestigungsvorrichtung für Flachbildschirme und einen Flachbildschirm zu schaffen, der mittels dieser Befestigungsvorrichtung montierbar ist.

Insbesondere ist eine nicht störend in Erscheinung tretende, vergleichsweise geringe Abmessungen aufweisende Befestigungsvorrichtung zu schaffen, mittels der der Flachbildschirm rasch montierbar ist.

Der Flachbildschirm soll mittels der Befestigungsvorrichtung vorzugsweise vertikal, seitlich sowie in der Neigung justierbar sein.

Ferner sollen die Befestigungsvorrichtung und der Flachbildschirm kostengünstig herstellbar sein.

Diese Aufgabe wird mit einer Befestigungsvorrichtung und einem Flachbildschirm gelöst, welche die in Anspruch 1 bzw. 9 angegebenen Merkmale aufweisen. Vorteilhafte Ausgestaltungen der Erfindung sind in weiteren Ansprüchen angegeben.

Die Befestigungsvorrichtung ist zur Installation eines Flachbildschirms geeignet, der eine grossflächige, in einem Gehäuse angeordnete und von einer tragenden Struktur gehaltene Anzeigeeinheit aufweist. Der installierte Flachbildschirm ist an dessen Unterseite mittels eines Tragprofils gestützt und getragen, das wenigstens ein stabil befestigtes Halteelement aufweist, welches in ein entsprechend ausgestaltetes Aufnahmeteil der tragenden Struktur eingreift und diese in Bezug auf das Tragprofil in konstanter Lage hält.

Der Flachbildschirm weist daher eine tragende Struktur auf, an deren Unterseite wenigstens ein Aufnahmeteil vorgesehen ist, in welches das wenigstens eine, auf einem Tragprofil angeordnete Halteelement eingreifen kann.

Besonders vorteilhaft kann das wenigstens eine Halteelement dorn- oder zylinderförmig oder als Rippe oder Platte ausgestaltet sein, die sich vorzugsweise zumindest annähernd über die gesamte Länge des Tragprofils erstreckt. Zur Aufnahme derart ausgestalteter Halteelemente weist die tragende Struktur des Flachbildschirms, die die Anzeigeeinheit vorzugsweise rahmenförmig umfasst, vorzugsweise ein parallel zur Unterseite des Gehäuses und gegebenenfalls daraus hervortretendes, vorzugsweise plattenförmiges Strukturelement auf, an welches das Tragprofil der Befestigungsvorrichtung unmittelbar oder mittelbar anlegbar ist. Das ein- oder mehrteilige Strukturelement weist vorzugsweise zwei einen Schlitz begrenzende Platten oder hohlzylindrische Hülsen auf, welche das der Aufnahme der Halteelemente dienende Aufnahmeteil bilden. Das Strukturelement kann beispielsweise mittels zwei stirnförmig gegeneinander gerichteten L-Profil-Teilen gebildet werden, durch die der Schlitz begrenzt wird, in den die auf dem Tragprofil vorgesehene Rippe einführbar ist.

In einer vorzugsweisen Ausgestaltung kann zwischen dem Strukturelement und dem Tragprofil ein elastisches Element vorgesehen sein, welches einerseits Vibrationen dämpft und andererseits die zwischen dem Strukturelement und dem Tragprofil wirkenden Kräfte ausgleicht.

Zur Installation des Flachbildschirms wird dieser über das Tragprofil angehoben, so dass dessen Halteelemente in die Aufnahmeteile der tragenden Struktur des Flachbildschirms einführbar sind. Besonders einfach ist dies möglich, wenn das Tragprofil eine Rippe aufweist, die beispielsweise seitlich in das schlitzförmige Aufnahmeteil eingeführt wird. Auch das Einführen von zwei oder mehr auf dem Tragprofil vorgesehener Dornen in hülsenförmig ausgestaltete Aufnahmeteile ist mit wenigen Handgriffen möglich.

Das stabile gegenseitige Verbinden der Befestigungsvorrichtung und des Flachbildschirms erfolgt daher schraubenlos mit wenigen Handgriffen. Das Verschrauben einer Montageplatte wie bei der in Figur 1 gezeigten Befestigungsvorrichtung 300, während der Flachbildschirm gehalten wird, entfällt. Das unten am Flachbildschirm anliegende Tragprofil tritt zudem nicht störend in Erscheinung.

Besonders vorteilhaft ist daher nicht nur der einfache Aufbau der Befestigungsvorrichtung, sondern auch der vorteilhafte Aufbau des Flachbildschirms, dessen tragende Struktur nicht zur Rückwand geführt werden muss. Stattdessen ist die tragende Struktur lediglich an deren Unterseite mit Aufnahmeteilen für die Halteelemente zu versehen.

In einer weiteren vorzugsweisen Ausgestaltung ist das vorzugsweise L-Profil-förmig ausgestaltete Tragprofil, das ein zum Tragen des Flachbildschirms dienendes erstes Teil aufweist, mittels eines zweiten Teils an einem Kopfstück befestigt, welches mittels einer Welle mit einem Montageblock gelenkig verbunden ist. Der Montageblock weist wenigstens eine Gewindebohrung auf, in der eine Justierschraube vorgesehen ist, die gegen einen Anschlag am Kopfstück drehbar ist, um dieses um ein gewünschtes Mass um die Welle zu drehen. Dadurch kann die Neigung des installierten Flachbildschirms rasch und präzise eingestellt werden.

Der Montageblock ist vorzugsweise entlang einer Stange verschiebbar, drehbar und arretierbar gelagert oder direkt oder über weitere Montageteile mit einer Wand oder Decke fest verbunden.

Nachfolgend wird die Erfindung anhand von Zeichnungen näher erläutert. Dabei zeigt:
- Figur 1: eine Befestigungsvorrichtung 300, welche eine an der Rückseite eines Flachbildschirms 100 verschraubbare Montageplatte 330 aufweist;
- Figur 2: die Befestigungsvorrichtung 300 von Figur 1 von der Seite gesehen;
- Figur 3: eine erfindungsgemässe Befestigungsvorrichtung 3 mit einem ersten Tragprofil 34, auf das ein erfindungsgemässer Flachbildschirm 1 aufgesetzt ist;
- Figur 4: ein zweites Tragprofil 34' und ein entsprechend ausgestalteter Flachbildschirm 1' vor der Installation;
- Figur 5: das zweite Tragprofil 34' und den Flachbildschirm 1' von Figur 4 nach der Installation;
- Figur 6: die Befestigungsvorrichtung 3 von Figur 3 von hinten gesehen;
- Figur 7: die Befestigungsvorrichtung 3 von Figur 3 in einer Schnittdarstellung;
- Figur 8: die Befestigungsvorrichtung 3 von Figur 3 von oben gesehen, in einer Darstellung entlang dem in Figur 7 eingezeichneten Schnitt A-A; und
- Figur 9: den Flachbildschirm von Figur 3 von vorn gesehen.

Figur 1 zeigt die eingangs erläuterte Befestigungsvorrichtung 300, welche eine an der Rückseite eines Flachbildschirms 100 mittels Schrauben 390 verschraubte Montageplatte 330 aufweist. In Figur 2, welche den Flachbildschirm 100 von der Seite zeigt, ist die tragende Struktur 1000 des Flachbildschirms 100 dargestellt, welche zum Zweck der Verbindung mit der Montageplatte 330 gegen die Rückwand geführt ist.

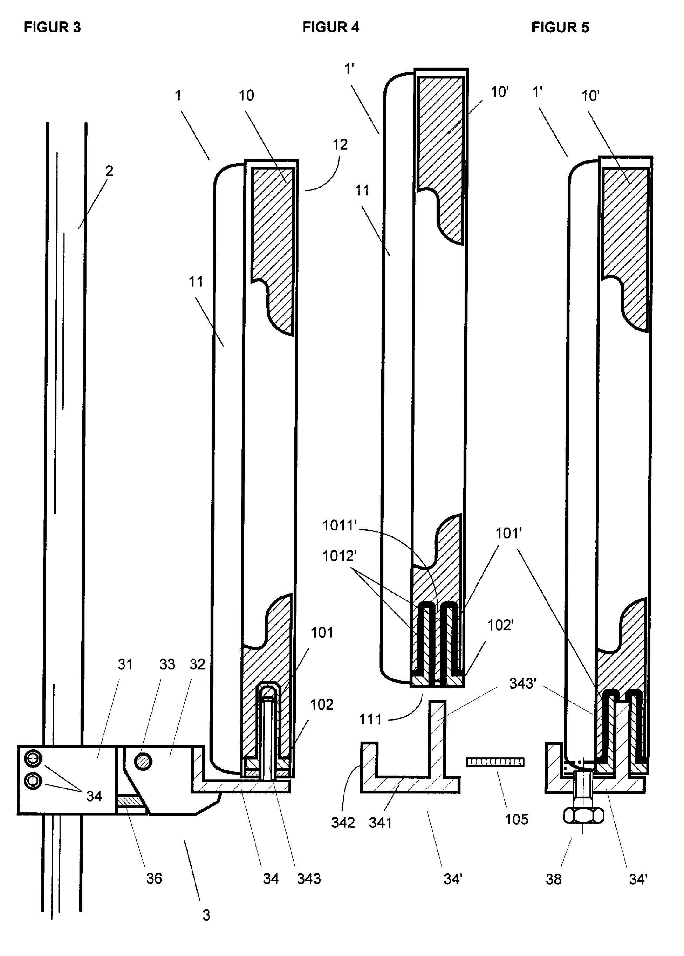

Figur 3 zeigt eine erfindungsgemässe Befestigungsvorrichtung 3 mit einem L-Profil-förmig ausgestalteten ersten Tragprofil 34, auf das ein erfindungsgemässer Flachbildschirm 1 aufgesetzt ist. Der Flachbildschirm 1, der eine grossflächige, in einem Gehäuse 11 angeordnete und von einer tragenden Struktur 10 gehaltene Anzeigeeinheit 12 aufweist, ist mit dessen Unterseite 111 bzw. mit einem Strukturelement 102 der tragenden Struktur 10 auf das erste Tragprofil 34 gestützt. Auf dem ersten Tragprofil 34 sind mehrere dornförmig ausgestaltete Halteelemente 343 angeordnet, welche durch das Strukturelement 102 in hülsenförmig ausgestaltete Aufnahmeteile 101 eingreifen. Die tragende Struktur 10, die die Anzeigeeinheit 12 vorzugsweise rahmenförmig umfasst, und somit auch der Flachbildschirm 1 werden mittels der Halteelemente 343 somit stabil in einer Lage senkrecht zum ersten Tragprofil 34, gehalten. Die Halteelemente 343 können dabei mit der tragenden Struktur 10 einstückig verbunden, daran angeschraubt oder angeschweisst sein.

In den Figuren 4 und 5 ist ein zweites Tragprofil 34' gezeigt, auf dessen L-Profil eine als Halteelement dienende und sich vorzugsweise über das gesamte L-Profil erstreckende Rippe 343' angeordnet ist. Die Rippe 343' korrespondiert zu einem entsprechend ausgestalteten Aufnahmeteil 101', das an der Unterseite der tragenden Struktur 10' angeordnet ist und aus dem Gehäuse 11 des Flachbildschirms 1 leicht hervortritt, so dass unter Vermeidung einer Einwirkung auf das Gehäuse 11 eine optimale Verbindung zwischen der tragenden Struktur 10' und dem zweiten Tragprofil 34' resultiert. Zur Dämpfung von Vibrationen kann zwischen der tragenden Struktur 10' und dem zweiten Tragprofil 34' ferner ein elastisches Element 105 vorgesehen sein.

Bei der in den Figuren 4 und 5 gezeigten tragenden Struktur 10' ist an dessen Unterseite ein zweiteiliges, als Aufnahmeteil 101' dienendes Strukturelement 102' vorgesehen, das durch zwei einen Schlitz 1011' begrenzende Platten 1012' gebildet wird.

Wie in den Figuren 4 und 5 gezeigt, wird der Flachbildschirm 1, zu dessen Installation, über das Tragprofil 34' angehoben und anschliessend abgesenkt, so dass die Rippe 343' in das Aufnahmeteil 101' eintreten kann. Zur Sicherung der Verbindung kann eine Schraube 38 durch das Tragprofil 34' hindurch in die tragende Struktur 10 bzw. in das Strukturelement 102' eingedreht werden.

Das in den Figuren 3 und 4 gezeigte erste und zweite Tragprofil 34, 34' sind L-Profil-förmig ausgestaltet und weisen ein zum Tragen des Flachbildschirms 1 dienendes erstes Teil 341 auf, auf dem das zumindest annähernd senkrecht dazu angeordnete Halteelement 343; 343' angeordnet ist. Durch das Fussstück des L-Profils wird ein zweites Teil 342 gebildet, das mit einem Kopfstück 32 der Befestigungsvorrichtung 3 verbunden ist, welches einen Montageblock 31 umgreift und mittels einer waagrecht auszurichtenden Welle 33 mit dem Montageblock 31 gelenkig verbunden ist, der eine Stange 2 umfasst.

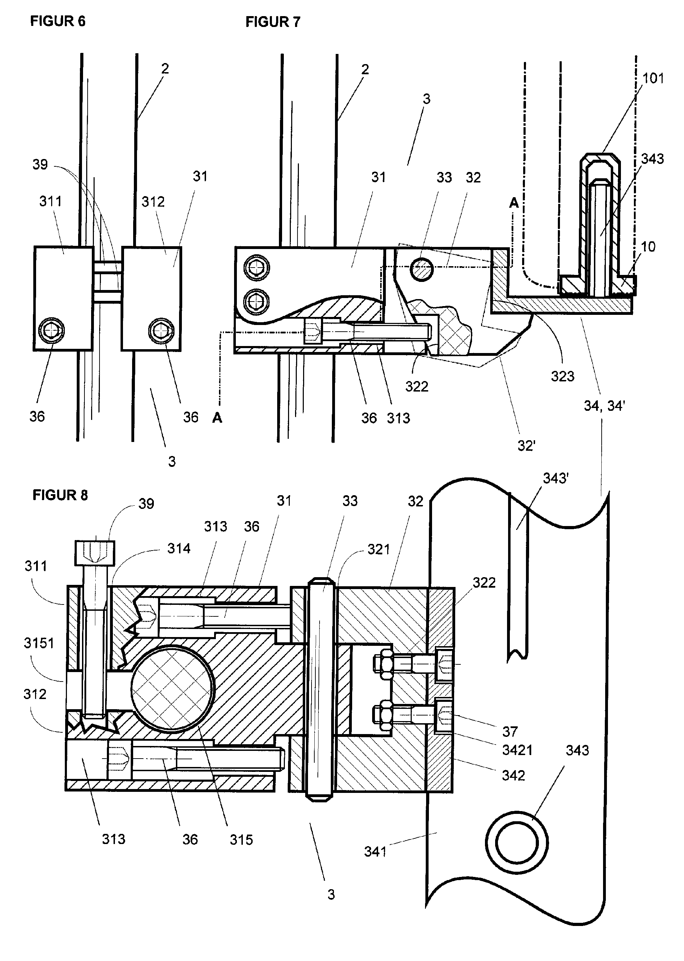

Die Befestigungsvorrichtung 3 wird nachstehend anhand der Figuren 6, 7 und 8 detailliert beschrieben. Aus Figur 6 und Figur 8 ist ersichtlich, dass der einstückige Montageblock 31 zwei Klemmbacken 311, 312 aufweist, welche eine zumindest annähernd zylindrische, der Aufnahme der Stange 2 dienende Öffnung 315 teilweise umfassen und die mittels zwei Schrauben 39 miteinander verbunden sind. Durch Anziehen der Schrauben 39 werden die Klemmbacken 311, 312 gegen die Stange 2 gepresst, so dass eine stabile kraftschlüssige Verbindung entsteht. Eine formschlüssige Verbindung ist realisierbar, indem die Innenseite der Klemmbacken 311, 312 und die Aussenseite der Stange 2 beispielsweise mit Abstufungen oder Rillen versehen werden. Der Montageblock 31 kann daher entlang der Stange 2 verschoben, seitlich gedreht und anschliessend in einer gewünschten Höhe fixiert werden.

Der Montageblock 31 kann ferner auch direkt oder mittels eines Gestänges an einer Wand oder Decke montiert werden.

Wie in den Figuren 7 und 8 gezeigt, weist der Montageblock 31 in dieser vorzugsweisen Ausgestaltung zwei Gewindebohrungen 313 auf, in denen Justierschrauben 36 vorgesehen sind, die unterhalb der Welle 33 gegen einen am Kopfstück 32 vorgesehenen Anschlag 322 drehbar sind. Durch Drehen der Justierschrauben 36 kann das Kopfstück 32 um ein gewünschtes Mass um die Welle 33 gedreht werden, wodurch die Neigung des installierten Flachbildschirms 1 einstellbar ist. Durch Zurückdrehen der Justierschrauben 36 neigt sich das Kopfstück 32 nach unten (siehe Position 32').

Aus Figur 7 ist ferner ersichtlich, dass das Kopfstück 32 frontseitig eine winkelförmige Ausnehmung 323 aufweist, in die das erste oder zweite Tragprofil 34, 34' derart einsetzbar ist, dass es seitlich und von unten gestützt ist. Anhand von Schraubenmuttern und Verbindungsschrauben 37, die durch Öffnungen 3421, 322 geführt sind, sind das Kopfstück 32 und das Tragprofil 34, 34' miteinander verbunden.

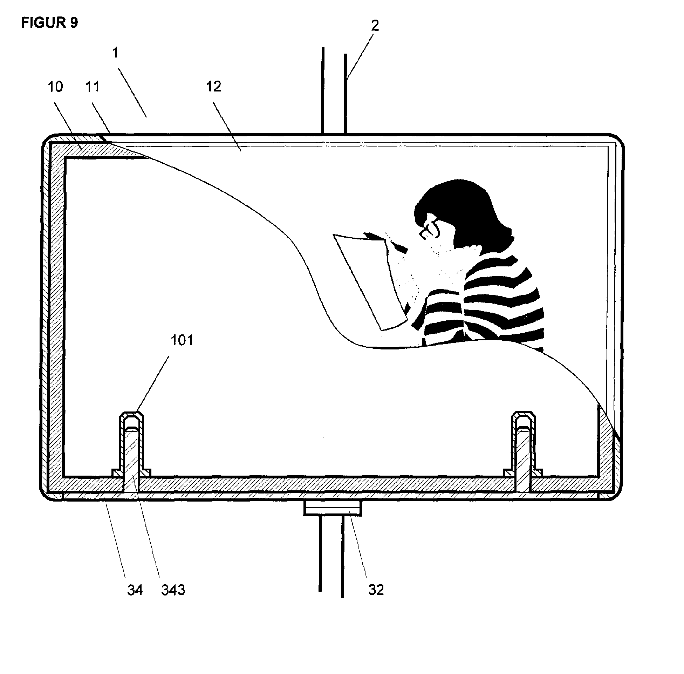

Figur 9 zeigt den Flachbildschirm 1 von Figur 3 von vorn gesehen. Deutlich hervorgehoben sind die auf dem Tragprofil 34 angeordneten Halteelemente 343, die in die von der tragenden Struktur 10 gehaltenen Aufnahmeteile 101 eingeführt sind.

Die Befestigungsvorrichtung 3 und der Flachbildschirm 1 wurden in bevorzugten Ausgestaltungen beschrieben. Ausgehend von der der erfindungsgemässen Lehre sind ferner weitere Ausgestaltungen realisierbar. Insbesondere sind andere Abmessungen der Vorrichtungsteile sowie andere Mittel zur Verbindung und gegenseitigen Justierung der Vorrichtungsteile realisierbar. Weiterhin ist es auch möglich, einzelne Verbindungselemente durch kinematische Umkehr zu vertauschen.

### Literaturverzeichnis:

[1] Europäische Offenlegungsschrift EP 1 265 210 A1
[2] U.S. Patentschrift 6,061,104

## Patentansprüche

1. Befestigungsvorrichtung (3) für einen Flachbildschirm (1), der eine grossflächige in einem Gehäuse (11) angeordnete und von einer tragenden Struktur (10) gehaltene Anzeigeeinheit (12) aufweist, mit einem an die Unterseite (111) des Flachbildschirms (1) anzulegenden Tragprofil (34, 34'), mittels dessen der Flachbildschirm (1) gestützt wird, **dadurch gekennzeichnet, dass** auf dem Tragprofil (34, 34') wenigstens ein stabil befestigtes Halteelement (343; 343') vorgesehen ist, welches in ein entsprechend ausgestaltetes Aufnahmeteil (101; 101') der tragenden Struktur (10) eingreifen und die tragende Struktur (10) des Flachbildschirms (1), in Bezug auf das Tragprofil (34, 34') in konstanter Lage halten kann.

2. Befestigungsvorrichtung (3) nach Anspruch 1, **dadurch gekennzeichnet, dass** das vorzugsweise L-Profil-förmig ausgestaltete Tragprofil (34, 34') ein zum Tragen des Flachbildschirms (1) dienendes erstes Teil (341), auf dem das zumindest annähernd senkrecht dazu angeordnete Halteelement (343; 343') angeordnet ist, und ein zweites Teil (342) aufweist, das an einem Kopfstück (32) befestigt ist, welches mittels einer bei der Installation zumindest annähernd waagrecht auszurichtenden Welle (33) mit einem Montageblock (31) gelenkig verbunden ist.

3. Befestigungsvorrichtung (3) nach Anspruch 2, **dadurch gekennzeichnet, dass** der Montageblock (31) wenigstens eine Gewindebohrung (313) aufweist, in der eine Justierschraube (36) vorgesehen ist, die gegen einen Anschlag (322) am Kopfstück (32) drehbar ist, um dieses um ein gewünschtes Mass um die Welle (33) zu drehen und den installierten Flachbildschirm (1) entsprechend zu neigen.

4. Befestigungsvorrichtung (3) nach Anspruch 2 oder 3, **dadurch gekennzeichnet, dass** der Montageblock (31) entlang einer Stange (2) verschiebbar, drehbar und arretierbar gelagert ist oder dass der Montageblock (31) direkt oder über weitere Montageteile mit einer Wand oder Decke verbindbar ist.

5. Befestigungsvorrichtung (3) nach Anspruch 3 oder 4, **dadurch gekennzeichnet, dass** der einstückige Montageblock (31) zwei Klemmbacken (311, 312) aufweist, welche eine zumindest annähernd zylindrische, der Aufnahme der Stange (2) dienende Öffnung (315) teilweise umfassen und die mittels wenigstens einer Schraube (39) miteinander verbunden sind.

6. Befestigungsvorrichtung (3) nach Anspruch 4, **dadurch gekennzeichnet, dass** das wenigstens eine Halteelemente (343) zumindest annähernd dorn- oder zylinderförmig ausgestaltet ist oder dass das wenigstens eine Halteelement (343') eine Rippe oder Platte ist, die sich vorzugsweise zumindest annähernd über die gesamte Länge des Tragprofils (34') erstreckt.

7. Befestigungsvorrichtung (3) nach e 6, **dadurch gekennzeichnet, dass** das wenigstens eine Halteelemente (343, 343') einstückig mit dem Tragprofil (34, 34') verbunden ist und/oder dass das Tragprofil (34, 34') mittels einer Schraube (38) mit der tragenden Struktur (10) verbindbar ist.

8. Befestigungsvorrichtung (3) nach einem der Ansprüche 2 bis 7, **dadurch gekennzeichnet, dass** das Kopfstück (32) eine winkelförmige Ausnehmung (323) aufweist, in die das Tragprofil (34, 34') derart einsetzbar ist, dass es seitlich und von unten gestützt ist.

9. Flachbildschirm (1) geeignet zur Verbindung mit einer Befestigungsvorrichtung (3) nach einem der Ansprüche 1 bis 8, mit einer grossflächigen in einem Gehäuse (11) angeordneten und von einer tragenden Struktur (10) gehaltenen Anzeigeeinheit (12), **dadurch gekennzeichnet, dass** die tragende Struktur (10) an dessen Unterseite wenigstens ein Aufnahmeteil (101; 101') aufweist, in welches ein Halteelement (343; 343') eingreifen kann, das auf einem Tragprofil (34, 34') der Befestigungsvorrichtung (3) angeordnet ist, welches an die Unterseite (111) des Flachbildschirms (1) anzulegen ist.

10. Flachbildschirm (1) nach Anspruch 9, **dadurch gekennzeichnet, dass** die tragende Struktur (10), die die Anzeigeeinheit (12) vorzugsweise rahmenförmig umfasst, ein parallel zur Unterseite des Gehäuses (11) und gegebenenfalls daraus hervortretendes, vorzugsweise plattenförmiges Strukturelement (102) aufweist, an welches das Tragprofil (34, 34') unmittelbar oder mittelbar, vorzugsweise durch ein elastisches Element (105) getrennt, anlegbar ist.

11. Flachbildschirm (1) nach Anspruch 9 oder 10, **dadurch gekennzeichnet, dass** das Aufnahmeteil (101; 101') durch zwei einen Schlitz (1011') begrenzende Platten (1011') oder durch hohlzylindrische Hülsen gebildet ist, die mit dem ein- oder mehrteiligen Strukturelement (102) verbunden sind oder darin eingearbeitet sind.

12. Flachbildschirm (1) nach Anspruch 9, 10 oder 11 mit einer Befestigungsvorrichtung (3) nach einem der Ansprüche 1 bis 8.
